# EUROPEAN PATENT APPLICATION

(11) **EP 1 923 263 A1**
(43) Date of publication of application: **21.05.2008**
(21) Application number: 07120760.9
(22) Date of filing: 15.11.2007
(51) Int. Cl.: B60Q 1/26, F21S 8/10

(54) **Integral rear lamp**

(30) Priority: 15.11.2006 GB 0622706
(71) Applicant: ASPÖCK Systems GmbH, 4722 Peuerbach (AT)
(72) Inventor: Steiner, Erwin, 4722, Peuerbach (AT)
(74) Representative: Gustorf, Gerhard

(57) **Abstract**

An integral rear lamp (10), which provides a plurality of the functions end outline marker, stop, direction indicator, reverse, fog, tail functions and optionally a reflex triangle, wherein energy-efficient lamp elements (28) are preferably used,
characterized in that
the different functions are converted by a single- or multi-part multifunctional luminous surface (38) by a suitable selection and/or actuation of the existing lamp elements (28).

## Description

This invention relates to an integral rear lamp according to Claim 1

### STATE OF THE ART

Integral rear lamps are used in the first place to make a wide variety of vehicles clearly visible to following traffic, particularly in darkness, and secondly to give different signals to following vehicles through light signals.

Integral rear lamps therefore generally incorporate a plurality of luminous surfaces in different colours, in most cases white, yellow or red, which are actively illuminated by luminous elements in the integral rear lamp, as well as a passive reflector in certain designs.

An integral rear lamp of prior art (Flexible Lamps Ltd., Catalogue 2003-2004, page 4, Model 800) incorporates, for example, an end outline marker, stop light, direction indicator, reverse, fog and tail functions and an integral reflex triangle, as prescribed for towed vehicles.

As in most of the designs of prior art, the light elements are also constructed here as bulbs which are fed via the on-board mains of the vehicle, in most case with 24V or 12V d.c. voltage.

A model 756 can now also be found on the Internet under "Flexible Lamps" (www.flexible-lamps.co.uk/Catalogue/Products/756.htm) in different designs. This model uses light emitting diodes, abbreviated to LED, instead of the bulbs previously used. The advantage of these LED's is that they consume less electrical power with the same light intensity, i.e. LED's have a higher efficiency in terms of the conversion of electrical energy to light power and a longer life.

The disadvantage of such prior art technique is that a separate luminous surface is required for each function, i.e. one surface for the end outline marker, another one for the direction indicator, etc. A flexible arrangement of the luminous surfaces is not possible, and separate variants are produced for different requirements. Among other things there is a variant for both the left and right side of the vehicle. Moreover, this lamp is very large in terms of dimensions because of the multiplicity of luminous surfaces, and is expensive to manufacture because of the large number of LED's. The light of the LED's is preferably clustered in one direction by the reflectors.

### STATEMENT OF OBJECT

The object of this invention is therefore to provide an integral rear light which can be used in a variable manner for different applications and is also compact in terms of its dimensions and can be manufactured under favourable conditions, as well as ensuring good visibility from different directions of vision.

This object is achieved according to the invention by a device with the features of Claim 1.

### EXEMPLARY EMBODIMENT

Further details, features and advantages are given in the following description of an exemplary embodiments of an integral rear lamp shown in the drawings, as well as in the associated claims.
Fig. 1 shows a perspective exploded view of an integral rear lamp
Fig. 2 shows a perspective view of the rear side of the integral rear lamp
Fig. 3 shows a view of the integral rear lamp from below
Fig. 4 shows a side view of the integral rear lamp
Fig. 5 shows a view of the front side of the integral rear lamp
Fig. 6 shows a sectional view of the integral rear lamp along line X-X in Fig. 5
Fig. 7 shows a sectional view of the integral rear lamp along line Y-Y in Fig. 5
Fig. 8 shows a perspective sectional view of the integral rear lamp along line Z-Z in Fig. 5.

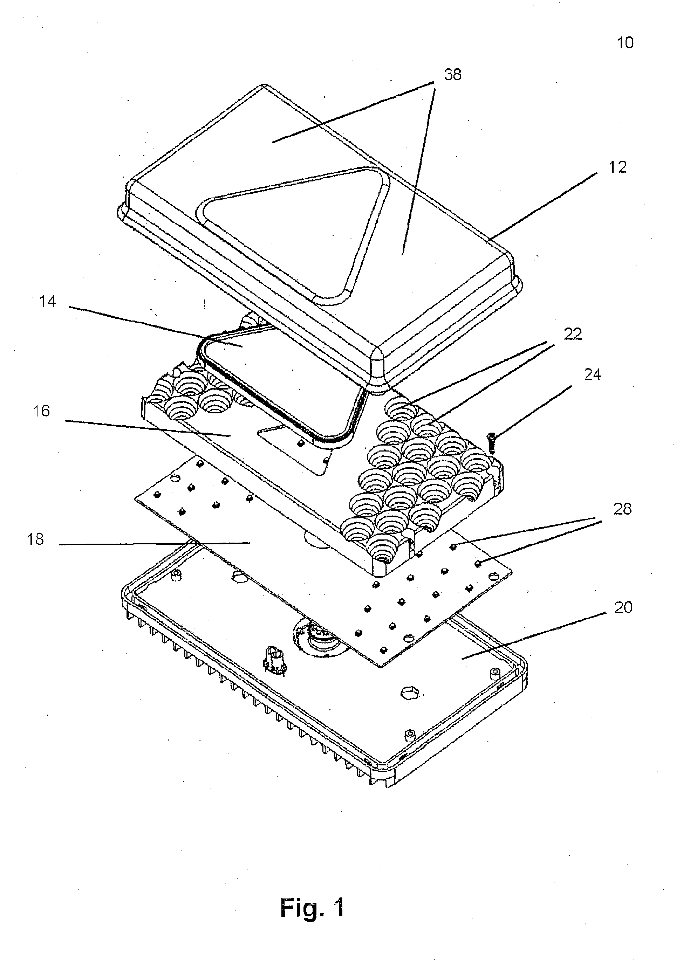

Figure 1 shows integral rear lamp 10 consisting of upper housing section 12, reflector 14, reflector module 16, lamp module 18 and lower housing section 20.

Lamp module 18, with luminous elements 28 and reflector module 16, are fastened to lower housing section 20 by means of a plurality of connecting elements 24. Upper housing section 12 with reflector 14 is connected to the component comprising reflector module 16, lamp module 18 and lower housing section 20, for example by means of a snap connection. In this exemplary embodiment the reflector has the shape of a triangle whose vertex is at the top, as prescribed for towed vehicles such as trailers or semitrailers.

Luminous elements 28 are constructed preferably as LED*'*s, which consume much less energy with the same light yield than conventional bulbs.

Reflectors 22 are preferably arranged close together or slightly overlapping on reflector module 16 to obtain as uniform an illumination of the entire single-part or multi-part luminous surface 38 as possible.

Here luminous elements 28 are actuated by an electronic circuit which is preferably installed in the region behind reflector 14 so that it does not interrupt luminous surface 38. In a design without reflector 14, i.e. with a luminous surface 38 throughout the width and height of integral rear lamp 10, the electronic circuit is preferably installed in the region between lamp module 18 and lower housing section 20. In such a design the overall height of integral rear lamp 10 may be made slightly larger.

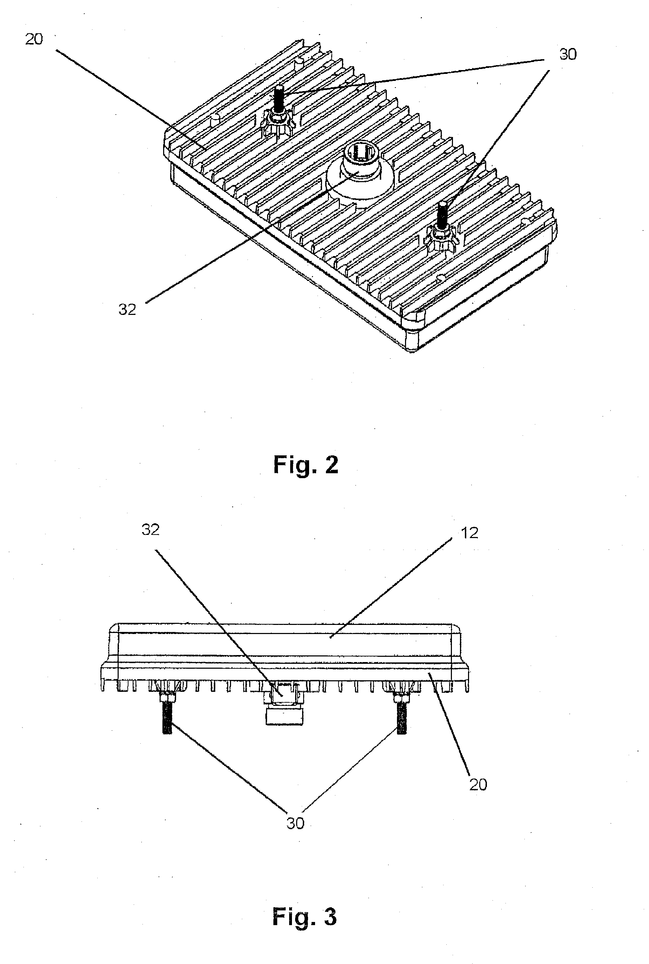

Figure 2 shows lower housing section 20, preferably with a plurality of fastening elements 30 which enable integral rear lamp 10 to be fastened to different types of vehicles. Lower housing section 20 also contains a connecting element 32, which is preferably designed as a plug connection for a standardised connecting cable. Integral rear lamp 10 is supplied with electrical energy and control signals via this connection 32.

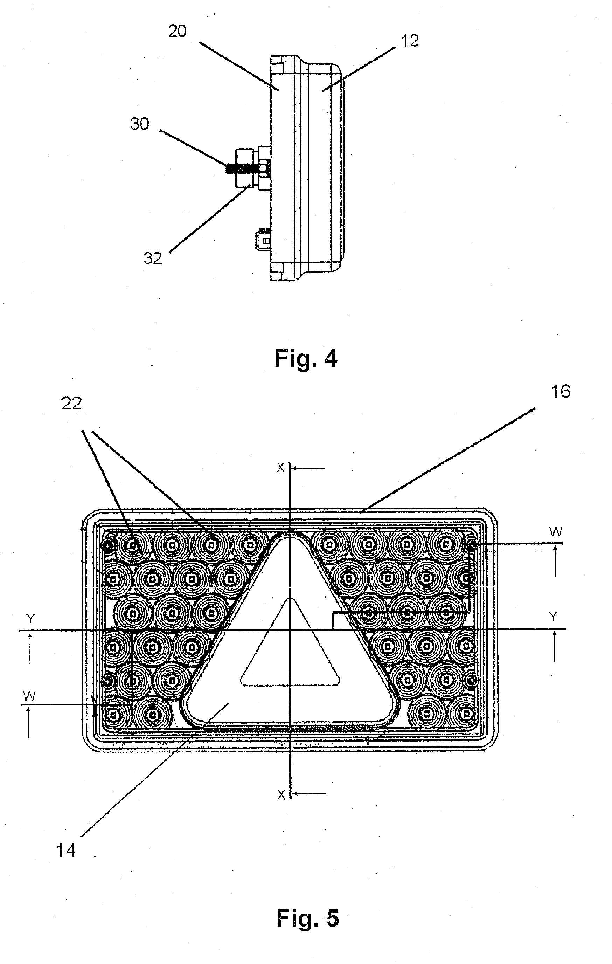

Figures 3 and 4 show the integral rear light in two further views.

Figure 5 shows the front side of integral rear lamp 10 with the arrangement of reflector 14 and a multiplicity of reflectors 22, which allow as uniform an illumination of luminous surface 38 as possible.

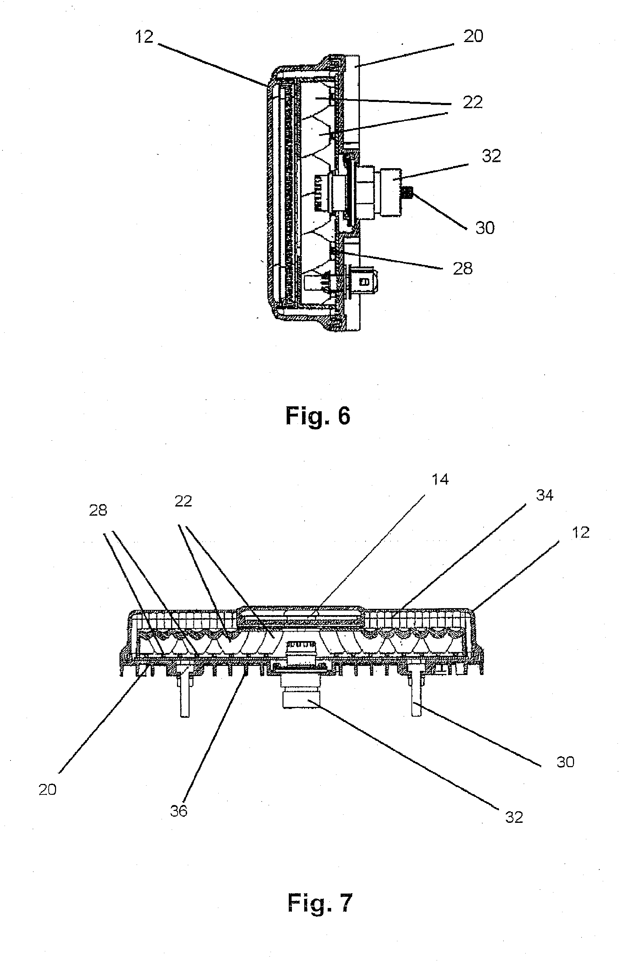

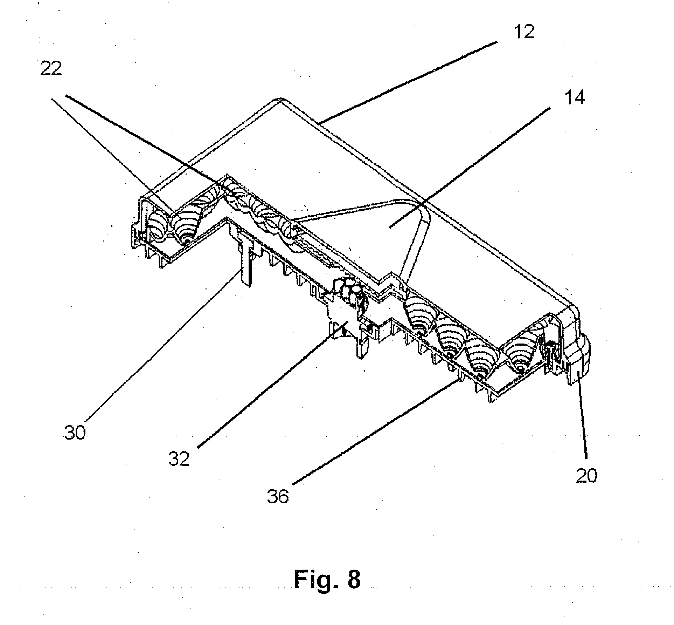

Figures 6 to 8 show integral rear light 10 in different sectional views. Here optional control elements 34 in upper housing section 12 can be seen next to the elements already described, which control elements are used to influence the distribution of light over luminous surface 38. For example, the illumination can be rendered more uniform thereby and visibility improved if one does not look vertically at luminous surface 38.

Moreover, cooling elements 36 can be seen which are here designed as cooling ribs and serve to ensure better discharge of the heat loss from the electrical and electronic components of integral rear lamp 10.

### List of reference numbers

- 10: Integral rear lamp
- 12: Upper housing section
- 14: Reflector
- 16: Reflector module
- 18: Lamp module
- 20: Lower housing section
- 22: Reflector
- 24: Connecting element
- 26: Section
- 28: Lamp element
- 30: Fastening element
- 32: Connecting element
- 34: Control elements
- 36: Cooling elements
- 38: Luminous surface

## Claims

1. An integral rear lamp (10), which provides a plurality of the functions end outline marker, stop, direction indicator, reverse, fog, tail functions and optionally a reflex triangle, wherein energy-efficient lamp elements (28) are preferably used,
**characterised in that**
the different functions are converted by a single- or multi-part multifunctional luminous surface (38) by a suitable selection and/or actuation of the existing lamp elements (28).

2. The integral rear lamp (10) according to Claim 1, **characterised in that** the lamp elements (28) are constructed as light emitting diodes (abbreviated to: LED) .

3. The integral rear lamp (10) according to at least one of the preceding claims, **characterised in that** lamp elements (28) are used which are able to illuminate in more than one colour, for example multi-coloured LED's which illuminate in different colours according to the voltage applied.

4. The integral rear lamp (10) according to Claim 1, **characterised in that** the lamp elements (28) are selected and/or actuated by an electronic circuit.

5. The integral rear lamp (10) according to at least one of the preceding claims, **characterised in that** the integral rear lamp (10) is constructed from a lower housing section (20), lamp module (18), reflector module (16), optional reflector (14) and upper housing section (12).

6. The integral rear lamp (10) according to at least one of the preceding claims, **characterised in that** the electronic circuit is installed preferably behind the optional reflector (14).

7. The integral rear lamp (10) according to at least one of the preceding claims, **characterised in that** the electronic circuit is preferably installed in the free space between the lamp module (18) and lower housing section (20) where there is no reflector (14).

8. The integral rear lamp (10) according to at least one of the preceding claims, **characterised in that** due to reflectors (22) in the reflector module (16) as uniform an illumination of the luminous surface (38) as possible is provided by the lamp elements (28).

9. The integral rear lamp (10) according to at least one of the preceding claims, **characterised in that** the reflectors (22) in the reflector module (16) are arranged as closely possible to each other, or so that they overlap slightly, to ensure as complete an illumination of the luminous surface (38) as possible.

10. The integral rear lamp (10) according to at least one of the preceding claims, **characterised in that** the light distribution is influenced by control elements (34) which are preferably integrated in the upper housing section (12).

11. The integral rear lamp (10) according to at least one of the preceding claims, **characterised in that** the heat loss from the electrical / electronic components is discharged better by cooling elements (36) which are preferably installed on the lower housing section (20).

12. The integral rear lamp (10) according to at least one of the preceding claims, **characterized in that** the cooling elements (36) are designed as cooling ribs.

13. An integral rear lamp as described herein with reference to Figures 1 to 8 of the accompanying drawings.
